Europäisches Patentamt

European Patent Office

Office européen des brevets

(11) Numéro de publication: **0 307 297**
A1

## (12) DEMANDE DE BREVET EUROPEEN

(21) Numéro de dépôt: **88402225.2**

(22) Date de dépôt: **05.09.88**

(51) Int. Cl.⁴: **B 01 J 8/02**
F 25 B 17/08, F 25 B 49/00,
C 09 K 5/00

(30) Priorité: **07.09.87 FR 8712388**

(43) Date de publication de la demande:
**15.03.89 Bulletin 89/11**

(84) Etats contractants désignés:
**AT BE CH DE GB IT LI LU NL SE**

(71) Demandeur: **SOCIETE NATIONALE ELF AQUITAINE**
**Société anonyme dite**
**Tour Elf 2, Place de la Coupole La Défense 6**
**F-92400 Courbevoie (FR)**

(72) Inventeur: **Spinner, Bernard**
**23 Avenue Joffre**
**F-66200 Corneilla del Vercol (FR)**

**Mauran, Sylvain**
**14 Rue Nationale**
**F-66600 Espira de L'Agly (FR)**

**Balat, Marianne**
**14 Avenue Antoine Casenobe**
**F-66330 Saleilles (FR)**

**Roca, Alain**
**3 Rue Lafayette**
**F-66000 Perpignan (FR)**

(74) Mandataire: **Boillot, Marc**
**SOCIETE NATIONALE ELF AQUITAINE Division**
**Propriété Industrielle Tour Elf**
**F-92078 Paris la Défense Cédex 45 (FR)**

(54) Procédé de conduite d'une réaction thermochimique et installation permettant la mise en oeuvre de ce procédé.

(57) Procédé de conduite d'une réaction thermochimique d'absorption ou de désorption entre un gaz et un solide en présence d'un fluide caloporteur dans une enceinte fermée. Ce procédé comporte une première étape dans laquelle on détermine, pour la pression régnant dans le réacteur, la variation de la puissance moyenne de la réaction en fonction de l'écart qui existe entre la température du fluide caloporteur et la température d'équilibre de la réaction, donnée par le diagramme de Clapeyron, cette détermination permettant de définir une zone optimale dans laquelle la réaction a lieu avec une puissance moyenne maximale et une seconde étape, dans laquelle se conduit la réaction, selon laquelle on impose au fluide caloporteur une température de consigne telle que la réaction ait lieu dans la zone optimale.

**Description**

**PROCEDE DE CONDUITE D'UNE REACTION THERMOCHIMIQUE ET INSTALLATION PERMETTANT LA MISE EN OEUVRE DE CE PROCEDE**

La présente invention concerne un procédé de conduite d'une réaction thermochimique d'absorption et de désorption entre un gaz et un solide. Le principe de ces réactions est connu et trouve une application particulière à la réalisation de pompes à chaleur thermochimiques ou de dispositifs de stockage de calories tels que décrits dans le brevet français 2.547.512 : Procédé de mise en oeuvre de réaction gaz-solide, ou encore dans le brevet français n° 2.548.340 intitulé : Pompe à chaleur triphasique, ou encore dans le brevet français 2.582.790 intitulé : Procédé et dispositif thermochimique de stockage et de déstockage de la chaleur.

La thermodynamique de ces réactions est parfaitement connue par l'homme de l'art, et en particulier celui-ci connaît les courbes qui donnent l'évolution de la température d'équilibre en fonction de la pression du gaz, courbes connues sous le nom de diagramme de Clapeyron. Ces diagrammes sont très utiles pour la conduite d'une réaction car ils permettent pour une pression déterminée d'évaluer la température à l'équilibre et pour une température donnée de savoir quelle réaction va avoir lieu et dans quelle condition celle-ci va se faire. Au vu de ces diagrammes, il est évident pour l'homme de l'art que pour qu'une telle réaction ait lieu, il faut une température qui soit différente de la température d'équilibre.

Lors de la conduite de telles réactions, le choix de la température de réaction, qui est souvent déterminé par la température d'un fluide caloporteur permettant un échange de calories entre le milieu réactionnel et l'extérieur, est très important. En effet, cette température va déterminer tout d'abord l'apport de calories nécessaires à la conduite de la réaction et ensuite la vitesse de la réaction.

La présente invention a pour but un procédé qui permet d'une part de choisir une température de consigne la plus optimale possible et d'autre part de conduire la réaction avec une puissance maximale.

Pour cela, l'invention prévoit un procédé de conduite d'une réaction thermochimique d'absorption ou de désorption entre un gaz et un solide en présence d'un fluide caloporteur, réaction permettant un échange de calories entre le milieu réactionnel et un milieu extérieur, ladite réaction ayant lieu dans une enceinte fermée, ce procédé étant caractérisé en ce qu'il comporte :

- une première étape dans laquelle on détermine, pour la pression régnant dans le réacteur, la variation de la puissance moyenne de la réaction en fonction de l'écart qui existe entre la température du fluide caloporteur et la température d'équilibre de la réaction, donnée par le diagramme de Clapeyron, cette détermination permettant de définir une zone optimale dans laquelle la réaction a lieu avec une puissance moyenne maximale,

- et une seconde étape, dans laquelle se conduit la réaction, selon laquelle on impose au fluide caloporteur une température de consigne telle que la réaction ait lieu dans la zone optimale.

Selon un premier mode de réalisation de l'invention, la température de consigne à laquelle est conduite la réaction est choisie expérimentalement égale à une valeur telle que la réaction ait lieu dans la zone optimale, et la réaction est conduite avec une pression constante, égale à la pression d'équilibre.

Selon un second mode de réalisation, la réaction est conduite avec une température de consigne voisine de la température d'équilibre et avec une pression variable entre une pression de départ et la pression d'équilibre correspondant à ladite température de consigne.

Pour cela, le procédé consiste à conduire tout d'abord la réaction dans une enceinte fermée, de sorte que la pression puisse varier jusqu'à ladite pression déterminée par la température de consigne, puis ensuite la réaction est conduite dans une enceinte ouverte permettant d'atteindre la pression initiale.

Selon un troisième mode de réalisation de l'invention, ladite réaction est conduite principalement entre une pression égale à la pression d'équilibre correspondant à la température de consigne choisie, et une pression supérieure à la pression correspondant à l'équilibre de la réaction.

Pour ces trois modes de réalisation, la pression correspondant à l'équilibre de la réaction est la pression qui règne dans le réacteur associé au réacteur dans lequel a lieu la réaction.

Mais l'invention et ses avantages seront mieux compris à la lecture des exemples suivants donnés d'une manière illustrative et nullement limitative en référence aux figures jointes dans lesquelles :

- la figure 1 représente une pompe à chaleur thermochimique selon l'invention,

- les figures 2, 4 à 8 sont des diagrammes de Clapeyron,

- la figure 3 représente la variation de la puissance moyenne d'une variation en fonction de l'écart de température. On a représenté sur la figure 1 un premier réacteur (1) dans lequel a lieu une réaction entre un solide (2) et un gaz (3) en présence d'un fluide caloporteur circulant dans un échangeur (4). Ce réacteur est relié par une tubulure (5) à un réacteur associé (6) dans lequel a lieu une réaction entre le gaz (3) et sa phase liquide associé (7).

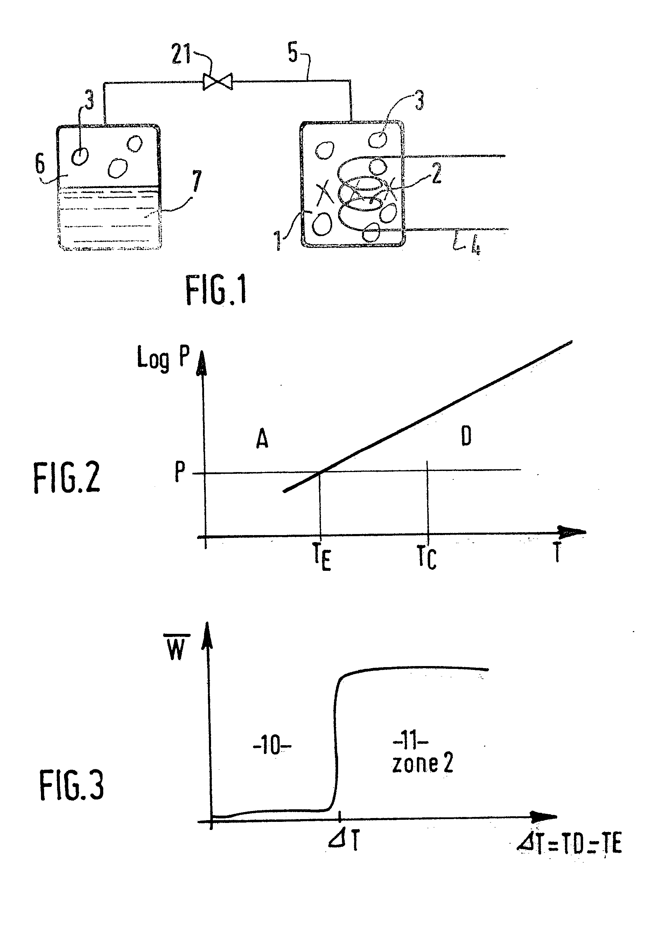

On a représenté sur la figure 2 le diagramme de Clapeyron de la réaction entre le gaz et le solide ayant lieu dans le réacteur (1). Ce diagramme représente les variations du logarithme de la pression en fonction de la température. Cette variation est représentée par une droite qui divise l'espace en deux parties A et D. Pour les couples de température et de pression choisis dans l'espace D, on obtiendra, si l'on choisit une pression différente de la pression d'équilibre correspondante, une réaction de désorption entre le gaz et le solde. De même, pour un couple choisi dans l'espace A et une pression différente de la pression d'équilibre correspondant à cette température on obtiendra une réaction d'absorption entre ledit gaz et ledit solide.

On a représenté, sur la figure 3, pour la même réaction, la variation de la puissance moyenne de la réaction en fonction de l'écart de température existant pour une pression donnée entre la température d'équilibre et la température de consigne, c'est-à-dire la température du fluide caloporteur circulant dans le serpentin (4).

Ces mesures ont été faites pour un taux d'avancement de la réaction égal à 0,8. On remarque sur la courbe de la figure 3 une zone (10) dénommée zone I pour lequel la puissance moyenne est très faible et une zone II (11) pour laquelle la puissance moyenne est quasiment maximale, correspondant à la zone optimale.

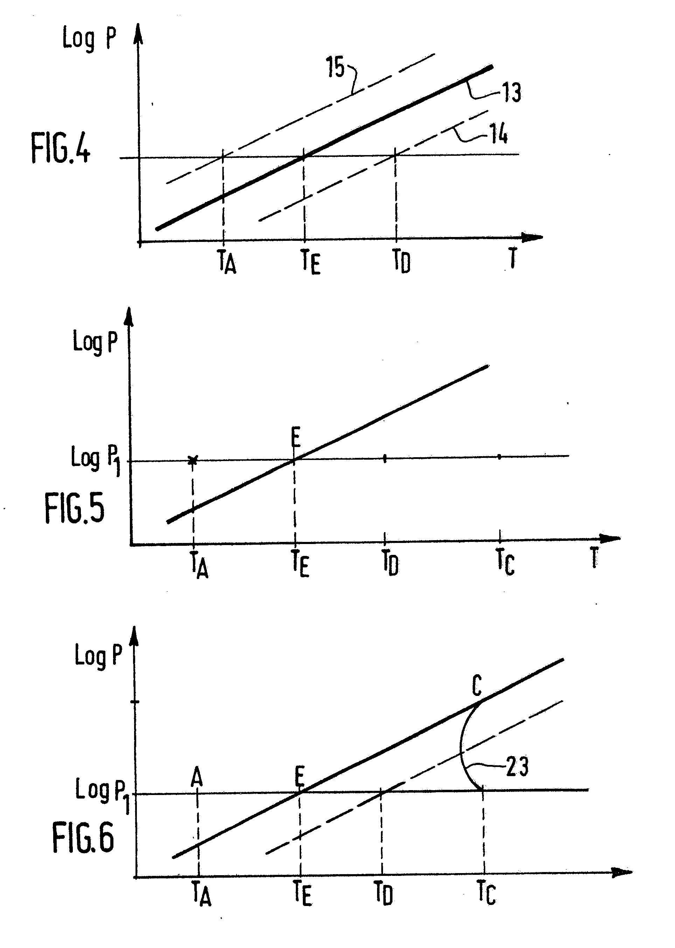

On comprend bien, que selon l'invention, on va choisir une température du caloporteur telle que la réaction ait lieu principalement dans la zone II. On a représenté figure 4 une figure similaire à la figure 2 qui comporte en plus de la courbe d'équilibre (13) une droite (14) qui lui est parallèle et décalée d'une valeur Te-Td correspondant sensiblement au delta T noté sur la figure 3. On a représenté aussi la même courbe (15) qui correspond aux mêmes valeurs mais pour la réaction inverse.

Pour la réaction de désorption, la zone optimale de la figure 3 correspond à l'espace qui est situé à droite de la droite (14) représentée figure 4.

En référence au diagramme de Clapeyron représenté sur la figure 5, on va expliquer le fonctionnement des systèmes selon le premier mode de mise en oeuvre de l'invention. Tout d'abord en référence à la figure 1, on rappelle que dans une première phase dite phase d'absorption, le milieu liquide (4) contenu dans le réacteur (6) s'évapore de façon à produire le gaz (3) qui par l'intermédiaire de la tubulure (5) pénètre dans le réacteur (1), vient en contact avec le solide (2) de façon à créer une réaction d'absorption du gaz sur ce solide. Ces deux réactions constituent le premier cycle de fonctionnement du système. Lors du second cycle, les réactions inverses se produisent. Pour expliquer le fonctionnement du procédé selon l'invention, on considérera qu'un premier cycle a été conduit et que dans le réacteur (1) on est en présence d'un solide ayant absorbé du gaz. A l'instant initial, nous sommes à une température Ta et à la pression P1. Cette température Ta est forcément inférieure à la température d'équilibre Te. Pour initier le deuxième cycle et créer ainsi la réaction de désorption entre le gaz et le solide, il est nécessaire d'amener le réacteur (1) à une température de consigne Tc supérieure à Te. Selon le premier mode de réalisation de l'invention, cette température Tc a été choisie égale à une valeur largement supérieure à la valeur Td.

Dans un premier temps, le réacteur (1) et son contenu vont se réchauffer jusqu'à ce que la température d'équilibre soit atteinte. Au fur et à mesure que la température va devenir supérieure à la température d'équilibre, la réaction de désorption va avoir lieu puis quand la réaction sera terminée la température à l'intérieur du réacteur va monter de façon à ce que l'on obtienne un équilibre thermique entre les constituants de ce réacteur et le fluide caloporteur à la température Tc. Selon les cinétiques mises en jeu, la réaction a lieu d'une part pour une zone de température comprise entre Te et Td et d'autre part, pour une zone de température supérieure à Td.

On a ainsi une réaction dont au moins une partie se passe dans la zone II représentée avec le repère (11) à la figure 3, c'est-à-dire dans la zone où la puissance moyenne est maximale.

Cependant, selon ce mode de réalisation, on est obligé de choisir une température de consigne assez élevée, ce qui peut être pénalisant pour la mise en oeuvre industrielle d'une telle réaction, et d'autre part, on garde quand même une partie de la réaction qui a lieu dans la zone I, c'est-à-dire dans une zone où le rendement énergétique n'est pas satisfaisant.

En référence à la figure 6 qui est une figure identique à la figure 5 qui porte donc les mêmes références quand les valeurs sont identiques, on va expliquer le second mode de fonctionnement de l'invention, ce mode de fonctionnement nécessitant sur installation représentée figure 1,1a présence d'une vanne (21) sur la tubulure (5). A l'initialisation du cycle de désorption, la réaction d'absorption est terminée et le réacteur (1) est à la température Ta et à la pression P1. Ce réacteur (1) est isolé du réacteur (6) par fermeture de la vanne (21). La température de consigne T est choisie égale à Tc supérieure à Td, la température à l'intérieur du réacteur (1) croît donc jusqu'à la température d'équilibre Te, puis à partir de cet équilibre la pression croît jusqu'à la pression PC, pression déterminée comme étant la pression d'équilibre pour la température Tc. Quand la pression atteint cette pression Tc, la vanne (21) est ouverte de sorte qu'un équilibre de pression se produit entre les deux réacteurs. A partir de ce moment, la réaction a lieu et la température à l'intérieur du réacteur (1) suit le chemin représenté par le repère (23) au fur et à mesure que la pression à l'intérieur de ce réacteur diminue pour atteindre la pression P1. Selon ce mode de réalisation, on remarque qu'une grande partie de la réaction a lieu dans la zone II pour laquelle ce mode de réalisation permet d'obtenir un rendement maximum tout en ayant une température de consigne Tc plus proche de la température Td de désorption.

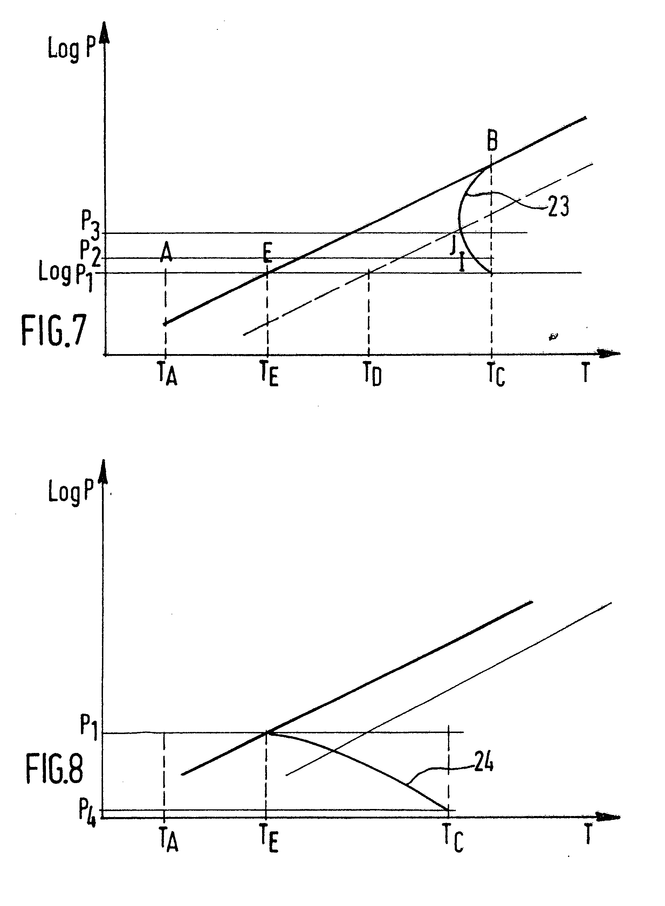

En référence à la figure 7 qui est identique à la figure 6, on va expliquer un perfectionnement du procédé précédent. Ce perfectionnement consiste à fermer la vanne (21) quand la pression arrive à une pression P2 pour laquelle la température du réacteur (1) est représentée par le point I sur la courbe (23), à laisser la pression dans le réacteur (1) augmenter jusqu'à la pression P3 et alors à ouvrir la vanne P3, cette valeur P3 correspondant au point J sur la courbe (23). L'intérêt de cette méthode réside dans le fait que la majorité de la réaction s'effectue dans la zone II, zone qui correspond à un maximum de puissance moyenne. En plus, la température de consigne peut être choisie très voisine de la température de désorption Td. Pour mettre en oeuvre cette méthode, on peut utiliser soit un système manuel soit un système comprenant une électro-vanne à la place de la vanne (21) et un capteur de pression permettant de commander l'électro-vanne en fonction de la pression régnant dans le réacteur. Mais aussi on peut utiliser un système programmé de commande de l'électro-vanne, ce système permettant d'éviter des pics de puissance globaux importants puisque la régulation se fait alors par une succession de petits pics.

En référence à la figure 8, on va expliquer un autre mode de mise en oeuvre de l'invention, ce mode de mise en oeuvre nécessitant la présence sur la conduite (5), en remplacement de la vanne (21) d'un circulateur ou d'un compresseur de façon à permettre la création d'une dépression dans le réacteur (1) et consécutivement une surpression dans le réacteur (6). De la même manière que précédemment, après une absorption, la température dans le réacteur (1) est égale à la température Ta. La température dans ce réacteur croît jusqu'à la température d'équilibre. A cet instant le circulateur est mis en route de façon à ce que la pression dans le réacteur (1) diminue et atteigne la pression représentée par P4 de sorte que la température dans ce réacteur lors de la réaction de désorption suit le profil (24) qui montre que la majorité de la réaction a lieu dans la zone II.

Pour la mise en oeuvre de ces modes de réalisation de l'invention, on peut utiliser tout système connu permettant de commander la vanne (21) en fonction de l'avancement de la réaction dans un réacteur, mais on peut aussi utiliser une sonde telle que décrite dans la demande de brevet déposé ce même jour par la demanderesse et intitulée : "Procédé d'utilisation d'une sonde à choc thermique, sonde et application du procédé".

Mais l'invention n'est pas limitée aux modes de réalisation décrits, elle en englobe au contraire toutes les variantes.

## Revendications

1 - Procédé de conduite d'une réaction thermochimique d'absorption ou de désorption entre un gaz et un solide en présence d'un fluide caloporteur, réaction permettant un échange de calories entre le milieu réactionnel et un milieu extérieur, ladite réaction ayant lieu dans une enceinte en contact avec un deuxième réacteur qui est le siège d'une réaction mettant en jeu au moins un gaz, caractérisé en ce qu'il comporte :

    - une première étape dans laquelle on détermine, pour la pression régnant dans le réacteur, la variation de la puissance moyenne de la réaction en fonction de l'écart qui existe entre la température du fluide caloporteur et la température d'équilibre de la réaction, donnée par le diagramme de Clapeyron, cette détermination permettant de définir une zone optimale dans laquelle la réaction a lieu avec une puissance moyenne maximale,

    - et une seconde étape, dans laquelle se conduit la réaction, selon laquelle on impose au fluide caloporteur une température de consigne telle que la réaction ait lieu dans la zone optimale.

2 - Procédé selon la revendication 1, caractérisé en ce que la température de consigne à laquelle est conduite la réaction est choisie expérimentalement égale à une valeur telle que la réaction ait lieu dans la zone optimale, et la réaction est conduite avec une pression constante, égale à la pression du gaz dans le deuxième réacteur.

3 - Procédé selon la revendication 1, caractérisé en ce que la réaction est conduite avec une température de consigne voisine de la température d'équilibre et avec une pression variable entre une pression de départ et la pression d'équilibre correspondant à ladite température de consigne.

4 - Procédé selon la revendication 3, caractérisé en ce qu'il consiste à conduire tout d'abord la réaction dans une enceinte fermée, à faire varier la pression jusqu'à ladite pression déterminée par la température de consigne, puis à conduire la réaction dans une enceinte ouverte permettant d'atteindre la pression initiale.

5 - Procédé selon la revendication 1, caractérisé en ce que la réaction est conduite principalement entre une pression égale à la pression d'équilibre correspondant à la température de consigne choisie, et une pression supérieure à la pression correspondant à l'équilibre de la réaction.

6 - Procédé selon la revendication 1, caractérisé en ce que la réaction est conduite principalement entre une pression égale à la pression d'équilibre correspondant à la température de consigne choisie, et une pression inférieure à la pression correspondant à l'équilibre de la réaction.

7 - Procédé selon la revendication 4, 5 ou 6, caractérisé en ce que la pression est modifiée par un circulateur ou un compresseur.

8 - Procédé selon la revendication 1, caractérisé en ce que la ou les réactions se passent dans une pompe à chaleur chimique.

FIG.1

FIG.2

FIG.3

FIG.4

FIG.5

FIG.6

FIG.7

FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 393 247  (STANDARD OIL) <br> * Page 4, ligne 30 - page 18, ligne 30; figures 1-6 * <br> --- | 1-6,8 | B 01 J    8/02 <br> F 25 B   17/08 <br> F 25 B   49/00 <br> C 09 K    5/00 |
| A | EP-A-0 001 496  (TERRY) <br> * Page 6, ligne 26 - page 20; figures 1-5 * <br> --- | 1,2,4,8 | |
| A | EP-A-0 202 662  (RUHRGAS) <br> * Page 10, ligne 23 - page 16, ligne 32; figures 1,2 * <br> --- | 1,7,8 | |
| A | DE-A-2 808 876  (HEIDENHEIMER WÄRMEVERTRIEBS-GESELLSCHAFT) <br> * En entier * <br> --- | 1,7,8 | |
| A | US-A-4 183 734  (LEPPARD) <br> * Colonne 4, ligne 3 - colonne 5, ligne 62; figures 1a,1b * <br> --- | 1,7,8 | |
| A | US-A-4 039 023  (McCLAINE) <br> * Colonne 2, ligne 14 - colonne 8, ligne 10; figures 1-7 * <br> --- | 1,7,8 | DOMAINES TECHNIQUES RECHERCHES (Int. Cl.4) |
| A | US-A-2 068 891  (SCHOLL) <br> * Page 1, colonne de droite, ligne 14 - page 3, colonne de gauche, ligne 53; figures 1-4 * <br> --- | 1 | F 25 B <br> B 01 J <br> C 09 K |
| A | WISSENSCHAFTLICHE VERÖFFENTLICHUNGEN SIEMENS-KONZERN, vol. 12, no. 2, 1933, pages 89-109; K. NESSELMANN: "Zur Theorie der Wärmetransformation" <br> --- | | |
| A | FR-A-2 526 926  (INSTITUT FRANCAIS DU PETROLE) <br> ---                              -/- | | |

Le présent rapport a été établi pour toutes les revendications

| Lieu de la recherche | Date d'achèvement de la recherche | Examinateur |
|---|---|---|
| LA HAYE | 12-12-1988 | BOETS A.F.J. |

EPO FORM 1503 03.82 (P0402)

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 411 384  (DUNLAP) --- | | |
| A | US-A-4 610 148  (SHELTON) --- | | |
| A | FR-A- 683 767  (CASALONGA) ----- | | |

**DOMAINES TECHNIQUES RECHERCHES (Int. Cl.4)**

Le présent rapport a été établi pour toutes les revendications

| Lieu de la recherche | Date d'achèvement de la recherche | Examinateur |
|---|---|---|
| LA HAYE | 12-12-1988 | BOETS A.F.J. |

**CATEGORIE DES DOCUMENTS CITES**

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

\-\-\-\-\-\-\-\-\-\-\-\-\-\-\-\-\-\-\-\-\-\-\-\-\-\-\-\-\-\-\-\-\-\-\-\-\-\-\-\-\-\-\-\-\-\-\-

& : membre de la même famille, document correspondant

EPO FORM 1503 03.82 (P0402)